# EUROPÄISCHE PATENTANMELDUNG

(11) **EP 4 852 276 A1**
(43) Veröffentlichungstag der Anmeldung: **09.12.2026**
(21) Anmeldenummer: 26182380.1
(22) Anmeldetag: 01.06.2026
(51) Int. Cl.: H02J 9/00, H02J 15/00, H02J 15/50, H02J 101/00, H02J 107/00

(54) **EINRICHTUNG ZUR SPEICHERUNG UND ABGABE ELEKTRISCHER ENERGIE**

(30) Priorität: 03.06.2025 DE 102025001894
(71) Anmelder: TERM ZERO GmbH, 60389 Frankfurt (DE)
(72) Erfinder: EMDE, Thomas, 60389 Frankfurt am Main (DE)
(74) Vertreter: Patentanwälte Olbricht Buchhold Keulertz

(57) **Zusammenfassung**

Die vorliegende Erfindung betrifft eine Einrichtung (1) zur Speicherung und Abgabe elektrischer Energie umfassend:
-wenigstens einen Anschluss (101) zur Einspeisung regenerativ erzeugter elektrischer Energie;
-wenigstens eine Speichereinrichtung (40) zur Speicherung eingespeister regenerativ erzeugter elektrischer Energie,
-wenigstens eine Abgabeeinrichtung (30) zur Abgabe der regenerativ erzeugten elektrischen Energie aus der Einrichtung an einen externen Verbraucher,
-wobei die Einrichtung (1) als mobiler oder transportabler Energiecontainer (60) ausgebildet ist, in dem die wenigstens eine Speichereinrichtung (40) für regenerativ erzeugte elektrische Energie untergebracht ist und an dem die wenigstens eine Abgabeeinrichtung (30) für regenerativ erzeugte elektrische Energie angeordnet ist und
-wobei die Einrichtung (1) wenigstens eine Kommunikationseinrichtung (75, 176) zur drahtlosen Kommunikation umfasst, geeignet zum Empfangen und/ oder Senden von Signalen.

## Beschreibung

Die vorliegende Erfindung betrifft eine Einrichtung zur Speicherung und Abgabe elektrischer Energie umfassend:
- wenigstens einen Anschluss zur Einspeisung regenerativ erzeugter elektrischer Energie;
- wenigstens eine Speichereinrichtung zur Speicherung eingespeister regenerativ erzeugter elektrischer Energie,
- wenigstens eine Abgabeeinrichtung zur Abgabe der regenerativ erzeugten elektrischen Energie aus der Einrichtung an einen externen Verbraucher,
- wobei die Einrichtung als mobiler oder transportabler Energiecontainer ausgebildet ist, in dem die wenigstens eine Speichereinrichtung für regenerativ erzeugte elektrische Energie untergebracht ist und an dem die wenigstens eine Abgabeeinrichtung für regenerativ erzeugte elektrische Energie angeordnet ist.

Aus der WO 2025/078680 A1 ist ein System zur Erzeugung, Abgabe und Speicherung elektrischer Energie mit den vorgenannten Merkmalen bekannt. Das bekannte System umfasst als ein Kernelement ein autarkes Stromnetz, welches vom öffentlichen Stromnetz unabhängig ist. Mit Hilfe von Windturbinen und Photovoltaikanlagen wird zunächst regenerative elektrische Energie erzeugt, in das autarke Stromnetz eingespeist und an Ladestationen geleitet, an denen elektrisch angetriebene Fahrzeuge oder mit Wasserstoff angetriebene Fahrzeuge aufgeladen bzw. betankt werden können. Weiterhin sind in dem System Stromspeichereinrichtungen vorgesehen, um im System erzeugte überschüssige regenerativ erzeugte elektrische Energie zu speichern. Im System erzeugte regenerative elektrische Energie kann auch elektrolytisch in Wasserstoff umgewandelt werden und dieser Wasserstoff kann dann beispielsweise in einem Wasserstofftank gespeichert werden.

Computersysteme von Industrieunternehmen oder öffentlichen Einrichtungen werden immer häufiger von Computerhackern oder Saboteuren angegriffen. Besonders problematisch sind derartige Angriffe, die in Zeiten internationaler Konflikte auch in verstärktem Umfang von ausländischen Geheimdiensten verübt werden, wenn sie sich gegen systemrelevante Einrichtungen der öffentlichen Infrastruktur richten, beispielsweise solche von Polizei, Feuerwehr, Militär, Krankenhäusern, Rundfunk- und Fernsehsendern, der Regierung oder öffentlichen Verwaltung, Kraftwerken, Umspannwerken, Rechenzentren, Verkehrssystemen, insbesondere Stellwerken im Schienenverkehr oder dergleichen. Die Computersysteme dieser Einrichtungen sind durchweg über das Internet mit einem öffentlich zugänglichen Netzwerk verbunden und sie sind für die elektrische Versorgung an das öffentliche Stromnetz angeschlossen. Durch diese Schnittstellen sind empfindliche Einfallstore vorhanden, die selbst bei Vorhandensein von Sicherheitsvorkehrungen wie Firewalls oder dergleichen, einem Hacker oder Saboteur eine Möglichkeit bieten, in das Computersystem der öffentlichen Einrichtung oder des Unternehmens einzudringen und dabei erheblichen Schaden anzurichten.

Ein wesentliches Problem ergibt sich daraus, dass die Saboteure auf diese Weise auch die Stromversorgung von Unternehmen und systemrelevanten Einrichtungen unterbrechen können oder gar das gesamte Stromnetz zum Erliegen bringen können. In Ländern wie Spanien, Frankreich und auch in England ist es erst kürzlich zu einem solchen teilweisen oder gar vollständigen Zusammenbruch des öffentlichen Stromnetztes gekommen. Ein solcher Sabotageakt hat enorme Auswirkungen auf das öffentliche Leben und führt zum Katastrophenzustand. Auch ein Hackerangriff auf die Datensysteme öffentlicher und privater Einrichtungen, die im Zusammenhang mit der Stromversorgung stehen, wie beispielsweise Kraftwerke, Umspannwerke, Transformatoren und andere Unternehmensbereiche von Energieversorgern kann zu einem direkten Stromausfall führen.

Vorhandene Notstromsysteme in den einzelnen Einrichtungen wie Krankenhäusern oder dergleichen sind in der Regel nur mit einer begrenzten Kapazität ausgelegt und können daher einen Netzausfall nur für eine begrenzte Zeitdauer kompensieren.

Es besteht daher ein erheblicher Bedarf an einer ausreichenden und netzunabhängigen Energieversorgung für derartige Stromausfälle, die im Notfall kurzfristig zur Verfügung steht. Weiterhin ist es ein Anliegen, Bereiche von öffentlichen Einrichtungen der genannten Art sowie Unternehmen bei Angriffen auf deren Computersysteme und Datenspeicher in geeigneter Form zu schützen.

Die DE 10 2006 041 659 A1 beschreibt einen mobilen Stromerzeuger, der als transportabler Container ausgebildet ist, eine Energiespeicherung durch wiederaufladbare Batterien aufweist und der weiterhin die Erzeugung und das Sammeln von Wasserstoffgas durch Elektrolyse von Wasser vorsieht. Über eine Schnittstelle kann die Aufnahme von elektrischem Strom aus externen Quellen erfolgen und über einen Verbraucheranschluss kann dieser Strom entnommen werden. Gegebenenfalls können photovoltaische Solarmodule auf dem Dach des Containers angebracht sein oder der Anbau eines Windgenerators vorgesehen sein. Die Erzeugung regenerativer elektrischer Energie an dem Container selbst ermöglicht jedoch nur die Erzeugung einer begrenzten Energiemenge.

Ein mobiler Stromerzeuger der vorgenannten Art bildet eine isolierte Einheit. Im Falle eines großflächigen Ausfalls des öffentlichen Stromnetzes, verursacht beispielsweise durch eine Naturkatastrophe, einen militärischen Angriff, Sabotage oder einen Hackerangriff, ist es jedoch wichtig, dass Notstrom für systemrelevante Einrichtungen wie beispielsweise Einrichtungen des Gesundheitswesens, des Militärs, der Polizei, der Feuerwehr, des Zivilschutzes, eines technischen Hilfswerks oder des Katastrophenschutzes priorisiert an definierten Orten und in definiertem Umfang zur Verfügung gestellt wird. Für diese Zwecke ist der bekannte mobile Stromerzeuger nicht ausgelegt.

Aufgabe der vorliegenden Erfindung ist es daher, eine Einrichtung zur Speicherung und Abgabe regenerativ erzeugter elektrischer Energie zur Verfügung zu stellen, bei der wichtige Informationen über die Einrichtung selbst, wie beispielsweise deren Standort, die in der Einrichtung gespeicherte Energiemenge und andere Parameter von außerhalb der Einrichtung, insbesondere aus der Entfernung, erfassbar sind, so dass sich die Einrichtung in ein System zur Versorgung mit Notstrom einbinden lässt.

Die Lösung der vorgenannten Aufgabe liefert eine erfindungsgemäße Einrichtung zur Speicherung und Abgabe regenerativ erzeugter Energie mit den Merkmalen des Anspruchs 1. Erfindungsgemäß ist vorgesehen, dass die Einrichtung wenigstens eine Kommunikationseinrichtung zur drahtlosen Kommunikation umfasst, die zum Empfangen und/ oder Senden von Signalen geeignet ist. Auf diese Weise ist es möglich, auch aus der Ferne auf wesentliche Informationen über die Einrichtung zuzugreifen, beispielsweise der Daten über den momentanen Standort der Einrichtung, über die aktuell verfügbare Energiemenge, die dort gespeichert ist, ob dort weitere Medien wie beispielsweise Wasserstoff, Kraftstoffe oder Wasser gespeichert sind. Die Einrichtung kann so in ein System für eine Versorgung mit Notstrom oder anderen Medien eingebunden werden, welches im Regelfall mehrere derartige mobile Einrichtungen zur Energieversorgung umfasst.

Die Kommunikationseinrichtung zur drahtlosen Kommunikation im Sinne der vorliegenden Erfindung kann insbesondere eine Funkeinrichtung, Mobilfunkeinrichtung, ein Satellitenkommunikations-Gerät oder dergleichen sein.

Vorzugsweise umfasst die erfindungsgemäße Einrichtung weiterhin eine Steuereinheit, die mit der drahtlosen Kommunikationseinrichtung in Kommunikationsverbindung steht, wobei die Steuereinheit geeignet ist, bei Anforderung von elektrischer Energie durch einen Verbraucher auf die Abgabeeinrichtung und/oder die Speichereinrichtung einzuwirken, um eine Abgabe von elektrischer Energie an den Verbraucher zu veranlassen. In der Steuereinheit können somit beispielsweise bei Anforderung regenerativ erzeugter elektrischer Energie über die Kommunikationseinrichtung empfangene Daten analysiert werden. Beispielsweise kann zunächst derjenige Verbraucher, der Energie anfordert, identifiziert werden, die Menge an angeforderter elektrischer Energie erfasst werden, weiterhin geprüft werden, wie viel elektrische Energie zum Zeitpunkt der Anforderung in den Speichereinheiten des Energiecontainers zur Verfügung steht etc. Auf Grundlage dieser Daten kann dann die Steuereinheit eine entsprechende Menge elektrischer Energie freischalten und der Verbraucher kann an der Abgabeeinrichtung des Energiecontainers diese Energiemenge entnehmen.

Die erfindungsgemäße Einrichtung umfasst vorzugsweise wenigstens eine Empfangseinrichtung und/oder Sendeeinrichtung, insbesondere wenigstens eine Antenne, die Teil der Kommunikationseinrichtung ist oder mit der Kommunikationseinrichtung in Verbindung steht. Über eine solche Antenne können die Daten von einem Verbraucher, der elektrische Energie, Wasserstoff oder ein anderes Medium aus dem Energiecontainer benötigt, empfangen werden. Die empfangenen Informationen werden in der Kommunikationseinrichtung oder der Dateneinheit verarbeitet. Da die Antenne vorzugsweise auch als Sendeeinrichtung dient, können anschließend über diese von der Kommunikationseinrichtung Daten an den Verbraucher gesandt werden, beispielsweise eine Bestätigung, dass die angeforderte elektrische Energie oder der Wasserstoff in der gewünschten Menge im Energiecontainer aktuell zur Verfügung steht. Bei einer negativen Mitteilung an den Verbraucher, das heißt, wenn die angeforderte elektrische Energie nicht in dem angeforderten Umfang zur Verfügung steht, kann der Verbraucher sich an einen anderen Energiecontainer wenden, der im System zur Verfügung steht. Vorzugsweise wird ein solches System eingesetzt, welches zwei oder mehrere, insbesondere eine größere Anzahl derartiger Energiecontainer umfasst, so dass der jeweils passende Energiecontainer ausgewählt werden kann und der Verbraucher über drahtlose Kommunikation entsprechend informiert wird. Es können beispielsweise im System unterschiedlich große Energiecontainer verfügbar sein oder solche, die entweder nur elektrische Energie oder zusätzlich auch Wasserstoff oder Wasser oder Kraftstoff oder ein anderes Medium enthalten. Letzteres kann beispielsweise Methanol sein, welches aus Wasserstoff gewonnen werden kann und sich als energiehaltiges Medium zum Beispiel für den Betrieb einer Brennstoffzelle eignet.

Ein Vorteil eines solchen Systems mit unterschiedlich ausgestatteten Energiecontainern besteht auch darin, dass diese räumlich verteilt untergebracht sein können. Bei einer Anforderung von Energie durch einen Verbraucher, kann jeweils derjenige Energiecontainer im System ausgesucht werden, der dem Verbraucher am nächsten stationiert ist, so dass in kürzester Zeit entweder der mobile oder transportable Energiecontainer zum Verbraucher hin verbracht werden kann oder der Verbraucher zum Standort des ausgewählten Energiecontainers fährt. Die angeforderte Energie steht somit dem Verbraucher in einem Notfall rasch zur Verfügung.

Weiterhin umfasst die erfindungsgemäße Einrichtung bevorzugt wenigstens eine Sicherungseinrichtung, geeignet zu prüfen, ob ein Verbraucher, der die Abgabe elektrischer Energie aus der Einrichtung anfordert, zu einer solchen Abgabe berechtigt ist. Hier liegt ein weiterer Vorteil, da über die Funkeinrichtung Signale des Verbrauchers empfangen werden können, die eine Identifizierung des Verbrauchers ermöglichen. Vorzugsweise stehen die in dem Energiecontainer gespeicherte elektrische Energie und die anderen Medien nicht beliebigen Verbrauchern zur Verfügung, sondern nur denjenigen, die eine Berechtigung für die Entnahme aufweisen. Dies hat den Vorteil, dass in einem Notfall die in den Energiecontainern vorhandenen Ressourcen nur berechtigten Verbrauchern zur Verfügung stehen, wie beispielsweise systemrelevanten Organisationen wie dem Militär, der Polizei, der Feuerwehr, Einrichtungen des Gesundheitswesens, des Katastrophenschutzes, technischen Hilfswerken und dergleichen. Die in den Energiecontainern vorhandenen Ressourcen werden damit gezielt für diese Organisationen bereitgehalten.

Als Sicherungseinrichtung in dem vorgenannten Sinn kann insbesondere die oben erwähnte Steuereinheit des Energiecontainers dienen. Die Steuereinheit ist vorzugsweise eingerichtet, Daten von der Kommunikationseinrichtung zu empfangen und mit den wesentlichen Komponenten des Energiecontainers zu kommunizieren, d.h. mit der oder den Speichereinrichtungen, mit der oder den Abgabeeinrichtungen für elektrische Energie und gegebenenfalls andere Medien und gegebenenfalls auch mit der Datenverarbeitungseinheit, so dass die Steuereinheit die Berechtigung eines Verbrauchers zur Abgabe elektrischer Energie oder anderer Medien wie beispielsweise Wasserstoff, Wasser oder Kraftstoff aus der Einrichtung prüfen kann und bei vorhandener Berechtigung entsprechende Schaltvorgänge veranlassen kann, die dem Verbraucher eine Entnahme des angeforderten Mediums an der entsprechenden Abgabeeinrichtung nach einer Freischaltung ermöglichen.

Gemäß einer bevorzugten Weiterbildung der vorliegenden Erfindung ist die jeweilige Abgabeeinrichtung für elektrische Energie, Wasserstoff oder ein anderes Medium jeweils in einem Grundzustand gesperrt. Wenn dann eine Freigabe von der oben beschriebenen Sicherungseinrichtung erfolgt, ist die Abgabeeinrichtung in einen Aktivzustand schaltbar, in der sie für eine Entnahme von elektrischer Energie, Wasserstoff oder ein anderes angefordertes Medium durch einen Verbraucher entsperrt. Auf diese Weise wird verhindert, dass ein nicht dazu autorisierter Verbraucher elektrische Energie, Wasserstoff oder ein anderes in dem Energiecontainer gespeichertes Medium entnimmt. Diese Vorgänge lassen sich beispielsweise über die Steuereinheit steuern, die mit einer Datenverarbeitungseinheit zusammenwirkt oder gegebenenfalls selbst eine solche Datenverarbeitungseinheit umfasst. Die Operationen der Steuereinheit können durch von der Kommunikationseinrichtung empfangene Signale ausgelöst werden, die die entsprechenden Befehle für die jeweilige Operation der Steuereinheit generieren. Wichtig ist dabei, dass zunächst eine Prüfung der Identität und der Berechtigung des anfordernden Verbrauchers erfolgt. Dabei kann beispielsweise ein Abgleich des über die Kommunikationseinrichtung, beispielsweise per Funk anfragenden Verbrauchers mit in der Steuereinheit oder Datenverarbeitungseinheit hinterlegten Daten vorgesehen sein. Auf diese Weise erkennt die Steuereinheit, dass es sich bei dem anfragenden Verbraucher um einen solchen handelt, der zu den in der Notfallsituation berechtigten Verbrauchern zählt.

Die Daten zu den zur Abgabe berechtigten Verbrauchern, die im Energiecontainer hinterlegt sind, können auch variiert werden, wozu der Energiecontainer beispielsweise mit anderen Einheiten eines die Energiecontainer umfassenden Systems kommunizieren kann. Wenn sich beispielsweise dabei herausstellt, dass ein anderer Energiecontainer des Systems für die Abgabe des angeforderten Mediums besser geeignet ist, beispielsweise weil dieser einen günstigeren Standort aufweist oder weil dieser über größere gespeicherte Kapazitäten des angeforderten Mediums verfügt, kann die Abgabe der elektrischen Energie oder des Mediums verweigert werden, obwohl zuvor festgestellt wurde, dass der anfragende Verbraucher grundsätzlich zu einer Abgabe berechtigt ist. Der Verbraucher wird dann beispielsweise über die Kommunikationseinrichtung hierüber informiert und an einen anderen Energiecontainer verwiesen. Außerdem kann auch der dann ausgewählte, besser geeignete Energiecontainer informiert werden, so dass dieser bei der sich dann anschließenden Anfrage des Verbrauchers das angeforderte Medium freischaltet.

Vorzugsweise ist die Kommunikationseinrichtung bzw. die mit dieser zusammenwirkende Datenverarbeitungseinheit eingerichtet, verschlüsselte Signale zu decodieren, die Informationen für die Identifizierung eines Verbrauchers enthalten. Da die Daten, die von einem Verbraucher bei einer Anfrage zu elektrischer Energie oder einem anderen Medium an den Energiecontainer übermittelt werden, sensibel sind, ist es von Vorteil, die entsprechenden Funksignale bei einer Anfrage zu verschlüsseln, um einen Missbrauch durch Unberechtigte zu vermeiden. Die Kommunikationseinrichtung bzw. die Datenverarbeitungseinheit sollte dann in der Lage sein, die verschlüsselten Daten zu decodieren sowie gegebenenfalls Daten, die von dem Energiecontainer an Verbraucher oder andere Energiecontainer des Systems gesandt werden, zu verschlüsseln.

Vorzugsweise ist somit die Steuereinheit eingerichtet, nach Identifizierung und Feststellung der Berechtigung eines Verbrauchers die entsprechende Abgabeeinrichtung für elektrische Energie, Wasserstoff, Wasser, Kraftstoff oder ein anderes Medium zu entsperren, so dass dann eine Entnahme durch einen zuvor identifizierten Verbraucher möglich ist.

Die Einrichtung umfasst gemäß einer bevorzugten Weiterbildung der Erfindung neben der gespeicherten elektrischen Energie aus regenerativen Quellen weiterhin wenigstens eine Speichereinheit für Wasserstoff und wenigstens eine Abgabeeinrichtung für Wasserstoff an einen Verbraucher. Wasserstoff ist ein hochenergetisches Medium, welches beispielsweise von Fahrzeugen mit einem entsprechenden Antrieb getankt werden kann oder dazu verwendet werden kann, eine Brennstoffzelle zu speisen, um elektrischen Strom herzustellen. Der Wasserstoff kann in dem Energiecontainer in einer Speichereinheit wie beispielsweise einem geeigneten Wasserstofftank bevorratet und an Verbraucher abgegeben werden. Es ist alternativ aber auch möglich, dass sich in dem Energiecontainer eine Einrichtung befindet, um den Wasserstoff dort bei Bedarf zu erzeugen. Die Erzeugungseinrichtung für Wasserstoff kann diesen beispielsweise elektrolytisch aus Wasser herstellen oder auch auf reduktiv chemischem Wege, beispielsweise durch Reaktion von Wasser mit einem Reduktionsmittel, insbesondere einem unedlen Metall wie zum Beispiel Eisen, Aluminium, Zink oder einem Reduktionsmittel wie zum Beispiel einem Eisen(II)-salz. Die Herstellung des Wasserstoffs nur bei Bedarf hat den Vorteil, dass im Energiecontainer weniger Platz beansprucht wird, da ein größerer Wasserstofftank als Speichereinheit entfällt. Die Anforderung und Abgabe von Wasserstoff kann in gleicher Weise erfolgen, wie dies bereits zuvor für die Abgabe elektrischer Energie erläutert wurde, das heißt die Anforderung erfolgt beispielsweise über Funk, der Verbraucher wird identifiziert und seine Berechtigung festgestellt und danach kann die Abgabeeinrichtung für Wasserstoff freigeschaltet werden. Auf die obigen Ausführungen wird hiermit Bezug genommen.

Der erfindungsgemäße Energiecontainer kann gemäß einer bevorzugten Weiterbildung der Erfindung weiterhin wenigstens eine Speichereinheit für Wasser oder Kraftstoff und wenigstens eine Abgabeeinrichtung für Wasser oder Kraftstoff an einen Verbraucher umfassen. In einer Notfallsituation kommt es häufig auch zu einer Knappheit an Trinkwasser, da beispielsweise durch einen Stromausfall Pumpen in den Wasserwerken ausfallen. Daher ist es von Vorteil, wenn ein erfindungsgemäßer Energiecontainer neben elektrischer Energie auch Wasser zur Verfügung stellt. Die Anforderung und Abgabe von Wasser kann in gleicher Weise erfolgen, wie dies bereits zuvor für die Abgabe elektrischer Energie erläutert wurde, das heißt die Anforderung erfolgt beispielsweise über Funk, der Verbraucher wird identifiziert und seine Berechtigung festgestellt und danach kann die Abgabeeinrichtung für Wasser freigeschaltet werden. Auf die obigen Ausführungen wird hiermit Bezug genommen.

Weiterhin ist es von Vorteil, wenn der erfindungsgemäße Energiecontainer eine Speichereinheit für wenigstens einen Kraftstoff und wenigstens eine Abgabeeinrichtung für Kraftstoff an einen Verbraucher umfasst. In einer Notfallsituation können somit Verbraucher mit Kraftstoffen wie beispielsweise Benzin, Diesel oder Kerosin oder mit einem anderen energiehaltigen Medium wie beispielsweise Methanol, Methan, Propan, Butan oder dergleichen versorgt werden, um beispielsweise Fahrzeuge mit Verbrennungsmotoren, Schiffe, Generatoren, Flugzeuge, mit Kraftstoff oder Gasmotoren oder Turbinen mit Gas oder Brennstoffzellen mit Methanol zu versorgen. Daher ist es von Vorteil, wenn ein erfindungsgemäßer Energiecontainer neben elektrischer Energie auch wenigstens einen Kraftstoff oder auch mehrere unterschiedliche Kraftstoffe zur Verfügung stellt. Die Anforderung und Abgabe von Kraftstoffen kann in gleicher Weise erfolgen, wie dies bereits zuvor für die Abgabe elektrischer Energie erläutert wurde, das heißt die Anforderung erfolgt beispielsweise über Funk, der Verbraucher wird identifiziert und seine Berechtigung festgestellt und danach kann die Abgabeeinrichtung für den Kraftstoff freigeschaltet werden. Auf die obigen Ausführungen wird hiermit Bezug genommen.

Es wurde bereits erwähnt, dass es gemäß einer bevorzugten Weiterbildung der vorliegenden Erfindung vorgesehen ist, wenn die erfindungsgemäße Einrichtung, das heißt insbesondere der Energiecontainer weiterhin wenigstens eine Datenverarbeitungseinheit und/oder einen Datenspeicher und wenigstens einen Datenanschluss umfasst, welcher eingerichtet ist für den Anschluss eines Geräts zur Dateneingabe in die Einrichtung oder eine Datenentnahme aus der Einrichtung. Die erstgenannte Variante einer Dateneingabe hat den Vorteil, dass einem Verbraucher in einer Notfallsituation, in der auch Computer ausfallen können, Speicherkapazität für elektronische Daten zur Verfügung gestellt werden kann, so dass der Verbraucher über den Datenanschluss Daten eingeben und in einem Datenspeicher des Energiecontainers speichern kann. Für eine solche Dateneingabe oder Datenentnahme können ähnliche Kriterien gelten und die Arbeitsweise der Einrichtung kann in ähnlicher Weise erfolgen, wie dies bereits zuvor für die Abgabe elektrischer Energie erläutert wurde, das heißt es erfolgt zunächst eine Meldung des entsprechenden Verbrauchers über die Kommunikationseinrichtung, beispielsweise über Funk, der Verbraucher wird dann von der Einrichtung identifiziert und seine Berechtigung wird festgestellt und danach kann ein Datenanschluss für eine Dateneingabe oder eine Datenentnahme freigeschaltet werden. Auf die obigen Ausführungen wird hiermit Bezug genommen. Die Datenverarbeitungseinheit kann beispielsweise dem Verbraucher Rechnerkapazität zur Verfügung stellen, so dass der Verbraucher über den Datenanschluss Daten in den Energiecontainer eingibt, diese Daten dann verarbeitet werden und bei Bedarf nach einem Rechenprozess wieder Ergebnisdaten an den Verbraucher ausgegeben werden. Es versteht sich, dass eine solche Nutzung der Kapazitäten des Energiecontainers mit einer Dateneingabe, gegebenenfalls Datenverarbeitung und Datenausgabe nur unter Beachtung strenger Sicherheitsvorkehrungen erfolgen kann.

Gemäß einer bevorzugten Ausbildung der Erfindung ist bei der hierin beschriebenen Einrichtung die Steuereinheit eingerichtet, einen Verbraucher zu identifizieren, dessen Berechtigung zur Entnahme von elektrischer Energie, Wasserstoff, Wasser oder Kraftstoff oder zum Empfang von Daten aus der Einrichtung oder zur Speicherung von Daten in der Einrichtung festzustellen und die entsprechende Abgabeeinrichtung für elektrische Energie, Wasserstoff, Wasser oder Kraftstoff oder den Datenanschluss insbesondere nach durchlaufen eines vorgeschriebenen Sicherheitsprotokolls zu entsperren.

Vorzugsweise umfasst das zuvor beschriebene erfindungsgemäße System wenigstens eine Landestelle für Flugzeuge, Hubschrauber oder Drohnen im Bereich wenigstens einer Abgabeeinrichtung zur Abgabe der regenerativ erzeugten elektrischen Energie aus wenigstens einem Energiecontainer an Fahrzeuge, Schiffe, Flugzeuge, Hubschrauber oder Drohnen. In einer Notfallsituation, in der große Eile geboten ist, kann der Energiecontainer somit direkt von einem Luftfahrzeug angeflogen werden, um elektrische Energie oder Wasserstoff oder Kraftstoff oder Gas aufzunehmen.

Gegenstand der vorliegenden Erfindung ist weiterhin ein System umfassend wenigstens eine Einrichtung mit den oben beschriebenen Merkmalen, wobei dieses System weiterhin umfasst:
- wenigstens eine ortsfeste Einrichtung zur Erzeugung regenerativer elektrischer Energie, welche von dem mobilen oder transportablen Energiecontainer räumlich entfernt ist und
- wenigstens einen Verbraucher, geeignet durch drahtlose Kommunikation mit dem Energiecontainer in Kontakt zu treten, sowie geeignet, nach einem Nachweis zur Berechtigung zur Entnahme mindestens eines Mediums, ausgewählt aus der Gruppe umfassend im Energiecontainer gespeicherte regenerativ erzeugte elektrische Energie, Wasserstoff, Wasser, Gas und Kraftstoff, dieses Medium aus dem Energiecontainer zu entnehmen oder Daten aus dem Energiecontainer zu empfangen oder in diesem zu speichern.

Das vorbeschriebene System sowie die Energiecontainer sind insbesondere für systemrelevante Verbraucher vorgesehen, insbesondere solche, die ausgewählt sind aus der Gruppe umfassend systemrelevante Einrichtungen, insbesondere Einrichtungen des Gesundheitswesens, des Militärs, der Polizei, der Feuerwehr, des Zivilschutzes, eines technischen Hilfswerks oder des Katastrophenschutzes.

Nachfolgend wird die vorliegende Erfindung anhand von Ausführungsbeispielen unter Bezugnahme auf die beiliegenden Zeichnungen näher erläutert. Dabei zeigen:
Figur 1 eine schematisch vereinfachte Darstellung eines beispielhaften erfindungsgemäßen Systems zur regenerativen Erzeugung, Leitung und Speicherung elektrischer Energie in einem autarken Stromnetz;
Figur 2 eine schematisch vereinfachte Darstellung einer beispielhaften erfindungsgemäßen mobilen Einrichtung zur Speicherung und Abgabe elektrischer Energie in Form eines Energiecontainers.

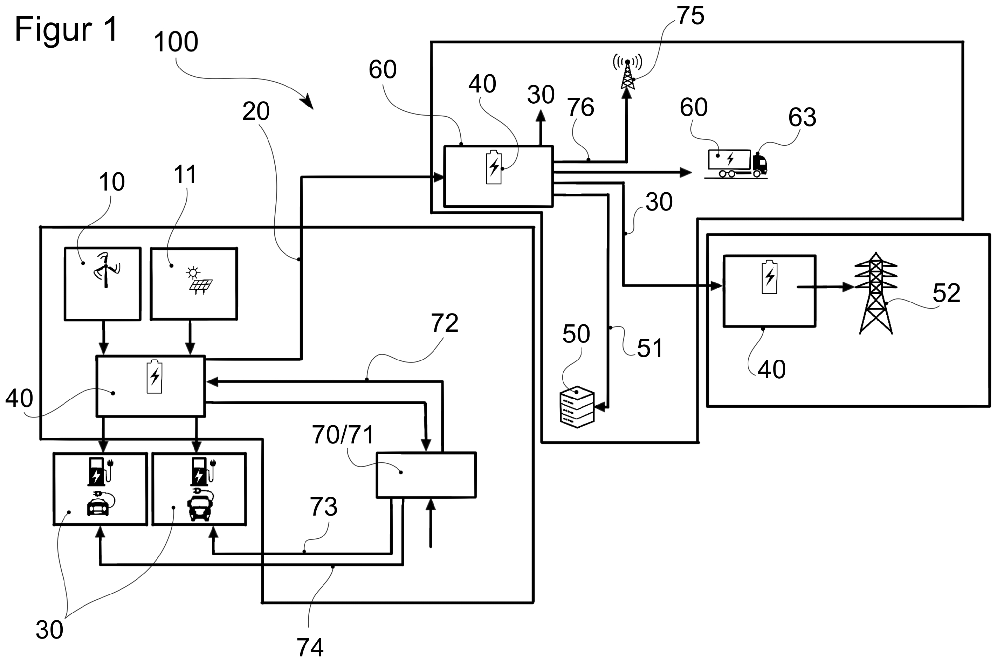

Nahfolgend wird zunächst unter Bezugnahme auf die Figur 1 ein beispielhaftes System zur regenerativen Erzeugung, Leitung und Speicherung elektrischer Energie in einem autarken

Stromnetz erläutert. Das System 100 umfasst wenigstens eine erste Erzeugungseinrichtung 10 für die Erzeugung regenerativer elektrischer Energie, beispielsweise eine Windkraftanlage. Das System umfasst vorzugsweise wenigstens eine zweite Erzeugungseinrichtung 11 für die Erzeugung regenerativer elektrischer Energie in Form einer Photovoltaikanlage. Vorzugsweise sind eine Vielzahl solcher Erzeugungseinrichtungen 10, 11 für die Erzeugung regenerativer elektrischer Energie vorgesehen, die jeweils Strom erzeugen und diesen in geeigneter Form hinsichtlich Frequenz und Spannung als Wechselstrom oder auch als Gleichstrom in ein autarkes Stromnetz 20 einspeisen. Die regenerativ erzeugte elektrische Energie kann von diesen Erzeugern 10, 11 auch unmittelbar in eine erste Speichereinrichtung 40, beispielsweise eine oder mehrere Batterien oder Akkumulatoren eingespeist werden, insbesondere, wenn zunächst zu dem Zeitpunkt der Erzeugung keine ausreichende Abnahme der Energie in dem autarken Stromnetz 20 vorgesehen ist.

Über Leitungen des autarken Stromnetzes 20 kann der regenerativ erzeugte Strom einem mobilen oder transportablen Energiecontainer 60 zugeführt werden, welcher über weitere Speicherungseinrichtungen 40 verfügt sowie auch gegebenenfalls über Abgabeeinrichtungen 30, die hier nicht im Detail dargestellt sind und die eine Abgabe der regenerativ erzeugten elektrischen Energie an Verbraucher ermöglicht, die in einem Notfall wie beispielsweise einem Ausfall des öffentliche Stromnetzes elektrische Energie benötigen. Wenn der Energiecontainer 60 transportabel ist, kann dieser auf ein Fahrzeug 63 aufgeladen und von diesem an einen gewünschten Ort transportiert werden, wo er für einen Abnehmer als Notstromspeicher dient. Derartige Notstromspeicher/Energiecontainer 60 können beispielsweise an Einrichtungen des Militärs oder Zivilschutz, an Rettungskräfte, Polizei, Krankenhäuser oder andere systemrelevante Einrichtungen geliefert werden.

Die mobilen/transportablen Energiecontainer 60 können als modulartige Baueinheiten in beispielsweise genormter Größe ausgebildet sein und sie können eingerichtet sein für eine Verbindung mit weiteren mobilen/transportablen Energiecontainern 60, so dass den jeweiligen Verbrauchern ohne größeren Aufwand und in sehr kurzer Zeit die jeweils benötigte Menge an elektrischer Energie zur Verfügung gestellt werden kann.

Das erfindungsgemäße System 100 umfasst weiterhin wenigstens ein vom öffentlichen Netz unabhängiges, dezentrales Rechenzentrum 50, welches ebenfalls mittels dem autarken Stromnetz 20 entnommener, regenerativ erzeugter elektrischer Energie versorgt wird. Dieses dezentrale Rechenzentrum 50 kann auch gegebenenfalls in einem mobilen/transportablen Energiecontainer 60 untergebracht sein oder es ist in räumlicher Nähe zu diesem angeordnet und entsprechend mit dem Energiecontainer über Stromleitungen 51 und in der Regel auch über Datenleitungen verbunden, die hier nur vereinfacht dargestellt sind. Über dieses oder weitere dezentrale Rechenzentren können die Berechnungen erfolgen, welche Energiemenge im System 100 zur Verfügung steht und welche Energiemenge mit welcher Priorität an welche Verbraucher über die Energiecontainer 60 und andere Abgabeeinrichtungen 30 abgegeben wird. Außerdem kann das dezentrale Rechenzentrum Rechenkapazität den Verbrauchern zur Verfügung stellen.

Das erfindungsgemäße System 100 umfasst weiterhin Funkeinrichtungen 75 für eine sichere dezentrale Kommunikation, die von allen Einrichtungen in sensiblen Bereichen wie beispielsweise dem Militär, Polizei, Feuerwehr, technischen Hilfswerken, medizinischen Hilfsorganisationen und dergleichen genutzt werden können. Diese Funkeinrichtungen 75 erhalten ebenfalls regenerativ erzeugte elektrische Energie über eine Stromleitung 76 aus dem autarken Stromnetz 20 beispielsweise aus einem der Energiecontainer 60 oder aus einer der Speichereinrichtungen 40.

Weiterhin kann eine Abgabe der Energie aus dem autarken Stromnetz 20 an weitere Speichereinrichtungen 40 abgegeben werden, aus denen auch bei Bedarf temporär eine Abgabe der regenerativen elektrischen Energie aus dem autarken Stromnetz 20 an ein externes Stromnetz 52 möglich ist. Die Abgabe an das externe Stromnetz 52 ist in diesem Fall über geeignete Sicherheitseinrichtungen streng gesichert, so dass vermieden wird, dass das autarke Stromnetz über eine solche Schnittstelle über das externe Stromnetz zugänglich ist. Die Verbindung mit einem externen Stromnetz 52 erfolgt daher nur über einen begrenzten Zeitraum, das heißt es besteht keine dauerhafte Verbindung zu dem externen Stromnetz 52.

Wie sich aus der Darstellung gemäß Figur 1 ergibt, umfasst das erfindungsgemäße System 100 weitere Speicherungseinrichtungen 40, die auch stationär angeordnet sein können oder ebenfalls transportabel sind und die beispielsweise auf Parkplätzen, an Raststätten, an öffentlichen Plätzen und dergleichen aufgestellt werden können und mit entsprechenden Abgabeeinrichtungen 30 (Ladestationen) für die Abgabe elektrischer Energie an Landfahrzeuge, das heißt PKWs oder LKWs in jeweils geeigneter Form eingerichtet sind. Diese Abgabeeinrichtungen 30 können auch als sogenannte "Multi-Use-Einheiten" ausgebildet sein und weiterhin beispielsweise für die Abgabe von Wasserstoff eingerichtet sein. Dieser Wasserstoff wird vorzugsweise ebenfalls mittels regenerativ erzeugter elektrischer Energie des Systems in einer Erzeugungseinrichtung 70 zur Erzeugung von Wasserstoff elektrolytisch aus Wasser hergestellt und kann in einer Speichereinheit 71 zur Speicherung von Wasserstoff gespeichert werden. Bei Bedarf kann dieser Wasserstoff beispielsweise über eine Brennstoffzelle wieder in elektrische Energie umgewandelt und über die Leitung 72 kann diese elektrische Energie einem Batteriespeicher 40 zugeführt werden. Der Wasserstoff kann außerdem über die Wasserstoffleitungen 73, 74 zu einer der Abgabeeinrichtungen 30 geleitet werden, so dass dort auch Wasserstoff abgegeben/getankt werden kann, beispielsweise auch getrennt an Abgabeeinrichtungen 30 für PKWs und LKWs.

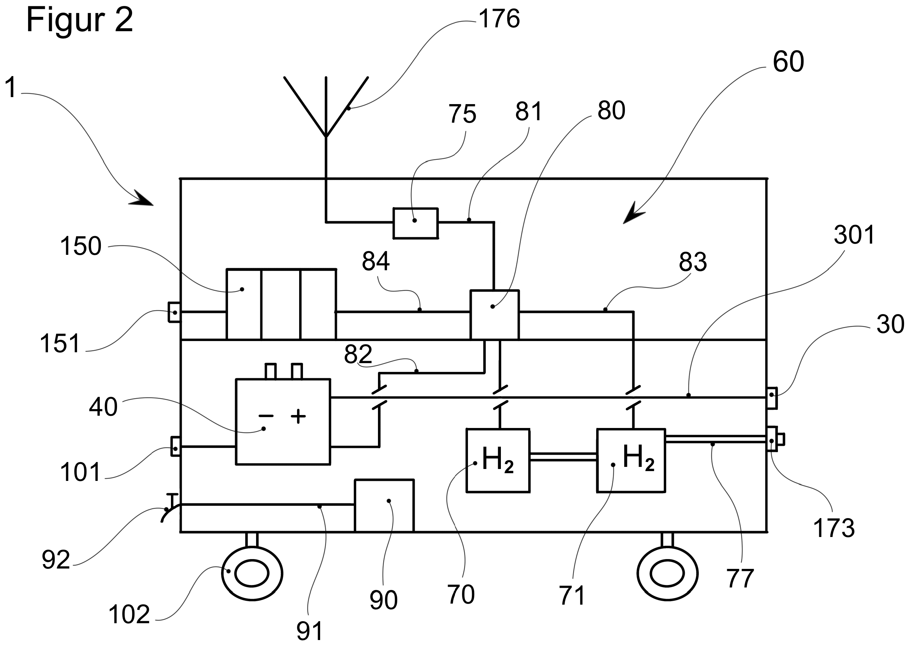

In den Speicherungseinrichtung 40 oder den Energiecontainern 60 gespeicherte regenerativ erzeugte elektrische Energie kann auch beispielsweise im Bereich von Parkplätzen, Autobahnraststätten, öffentlichen Plätzen, Bahnhöfen oder dergleichen an ausgewählte lokale Verbraucher abgegeben werden, die dort angesiedelt sind. Letzteres bietet sich insbesondere in abgelegenen Gegenden an, wenn dort kein öffentliches Stromnetz vorhanden ist oder aber beispielsweise in Katastrophenfällen oder im Kriegsfall, wenn dort Bunker oder Gebäude vorhanden sind, in denen Menschen temporär sicher untergebracht werden, so dass diese Einrichtungen mit regenerativ erzeugter Energie aus dem autarken Stromnetz versorgt werden können. Nachfolgend wird ein mögliches Ausführungsbeispiel eines Energiecontainers 60 unter Bezugnahme auf die Figur 2 im Detail näher erläutert. Die Darstellung zeigt eine schematisch vereinfachte Ansicht einer erfindungsgemäßen Einrichtung 1 in Form eines mobilen oder fahrbaren Energiecontainers 60. Dieser Energiecontainer 60 kann beispielsweise in ein System 100 der zuvor anhand von Figur 1 beschriebenen Art eingebunden werden. Der Energiecontainer 60 kann aber auch nur mit regenerativ erzeugter Energie aus einem derartigen System gespeist werden und ansonsten unabhängig von dem System 100 eingesetzt werden. Weiterhin ist es möglich, regenerative elektrische Energie in dem Energiecontainer 60 selbst zu erzeugen. Dieser Energiecontainer 60 kann beispielsweise wie ein Fahrzeuganhänger mit Rädern 102 ausgestattet sein. Alternativ kann der Energiecontainer 60 beispielsweise auch wie ein Container für Waren ausgebildet sein, der nicht unbedingt Räder benötigt, sondern auf das Chassis eines hier nicht dargestellten LKWs aufgeladen wird. Der Energiecontainer 60 kann alternativ auch mit einem Fahrerhaus und einem eigenen Antrieb ausgestattet sein, so dass er selbständig fahrbar ist. In allen genannten Fällen ist der Energiecontainer 60 als mobil bzw. transportabel anzusehen, da er mit vertretbarem Aufwand, gegebenenfalls mittels eines geeigneten Fahrzeugs, von einem Ort zum anderen transportiert werden kann. Dies ist von besonderem Vorteil, da der mobile oder fahrbare Energiecontainer 60 an einen Ort verbracht werden kann, an dem kein Strom aus dem öffentlichen Netz zur Verfügung steht, beispielsweise weil es zu einem Netzausfall gekommen ist oder Energie an einem Ort benötigt wird, an dem die entsprechende Infrastruktur nicht vorhanden ist.

Die erfindungsgemäße Einrichtung 1 zur Speicherung und Abgabe elektrischer Energie umfasst wenigstens einen Anschluss 101 zur Einspeisung regenerativ erzeugter elektrischer Energie, der sich beispielsweise außen am Energiecontainer 60 befindet. Über diesen Anschluss 101, beispielsweise eine geeignete Steckdose oder ein Kabel wird Energie aus regenerativen Quellen, insbesondere elektrische Energie, die zuvor durch Windkraft oder Photovoltaik gewonnen wurde, in die Einrichtung 1 eingespeist. Diese eingespeiste Energie kann in wenigstens einer oder mehreren Speichereinrichtungen 40 gespeichert werden. Als Speichereinrichtungen 40 können beispielsweise Akkumulatoren oder aufladbare Batterien dienen. Die Anzahl und Kapazität der Speichereinrichtungen 40 kann entsprechend dem jeweiligen Anwendungszweck, der Art und der Größe des Energiecontainers 60 variieren.

Die erfindungsgemäße Einrichtung umfasst weiterhin wenigstens eine Abgabeeinrichtung 30 zur Abgabe der regenerativ erzeugten elektrischen Energie aus der Einrichtung 1 an einen externen Verbraucher. Diese Abgabeeinrichtung 30 kann ebenfalls beispielsweise außen an dem Energiecontainer 60 angebracht sein, zum Beispiel in Form einer oder mehrerer Steckdosen, Anschlusskabel oder dergleichen, so dass man einen oder eine Anzahl elektrischer Verbraucher mit regenerativ gewonnener Energie versorgen kann, die in den Speichereinrichtungen 40 des Energiecontainers 60 gespeichert ist.

Weiterhin ist die Einrichtung 1 als mobiler oder transportabler Energiecontainer 60 ausgebildet, in dem die wenigstens eine Speichereinrichtung 40 untergebracht ist und an dem die wenigstens eine Abgabeeinrichtung 30 angeordnet ist. Die Speichereinrichtung kann je nach Bedarf und Größe des Energiecontainers 60 beispielsweise einen Akkumulator, zwei, drei, vier oder eine größere Anzahl an Akkumulatoren oder aufladbaren Batterien umfassen. Ein von dieser Speicherungseinrichtung 40 ausgehende elektrische Leitung 301 führt zu einer beispielsweise an der Außenwand des Energiecontainers 60 angebrachten Abgabeeinrichtung 30, beispielsweise in Form einer Steckdose, so dass dort Verbraucher mit elektrischer Energie versorgt werden können.

Gemäß einer Weiterbildung der Erfindung umfasst die Einrichtung 1 weiterhin wenigstens eine Speichereinheit 71 zum Speichern von Wasserstoff sowie wenigstens eine Abgabeeinrichtung 173 zur Abgabe von Wasserstoff an externe Verbraucher. Wasserstoff kann beispielsweise auch in dem Energiecontainer in einer Erzeugungseinrichtung 70 elektrolytisch oder auf andere Weise durch einen reduktiven Prozess hergestellt und in einer Speichereinheit 71 gespeichert werden. Alternativ ist es aber auch möglich, den Wasserstoff nicht in dem Energiecontainer 60 herzustellen, sondern diesen an einem anderen Ort, beispielsweise in Nähe eines Windkraftwerks oder einer Photovoltaikanlage, das heißt mittels regenerativer Energie herzustellen und dem Energiecontainer 60 diesen Wasserstoff zuzuführen und in einer Speichereinheit 71, beispielsweise einem Wasserstofftank, im Energiecontainer 60 zu speichern.

Im Rahmen der vorliegenden Erfindung sollten die Erzeugungseinrichtungen 70 zur elektrolytischen Erzeugung von Wasserstoff, die sich gegebenenfalls in dem Energiecontainer 60 befinden, mittels regenerativ erzeugter elektrischer Energie betrieben werden.

Alternativ können gemäß einer Variante der Erfindung in dem Energiecontainer Erzeugungseinrichtungen zur Erzeugung von Wasserstoff in einem reduktiven chemischen Prozess vorgesehen sein, insbesondere solche, bei denen die Erzeugung von Wasserstoff aus Wasser mittels eines geeigneten Reduktionsmittels erfolgt, beispielsweise mittels eines unedlen Metalls oder einer reduzierenden Metallverbindung.

Gemäß einer Weiterbildung der Erfindung kann ein erfindungsgemäßer Energiecontainer auch beispielsweise wenigstens eine Brennstoffzelle zur Erzeugung von Strom in der Einrichtung umfassen, wodurch es möglich wird, in dem Energiecontainer 60 gespeicherten Wasserstoff zu Strom umzusetzen, der dann in einer Speichereinrichtung 40 für elektrische Energie gespeichert oder gegebenenfalls auch über eine Abgabeeinrichtung 30 direkt an elektrische Verbraucher abgegeben werden kann.

Die erfindungsgemäße Einrichtung 1 kann beispielsweise weiterhin wenigstens eine Datenverarbeitungseinheit 150 umfassen, die in dem Energiecontainer 60 untergebracht ist. Eine derartige Datenverarbeitungseinheit 150 kann insbesondere einen oder mehrere Rechner umfassen, der vorzugsweise mit mittels in der Einrichtung gespeicherter elektrischer Energie betreibbar ist, so dass die Datenverarbeitungseinheit 150 keine externe Zufuhr von Energie aus einem Stromnetz benötigt. Insbesondere ist es von Vorteil, dass die in den Speichereinheiten 40 gespeicherte elektrische Energie zuvor aus regenerativen Quellen wie Windkraft oder Photovoltaik gewonnen wurde. Alternativ kann die für den Betrieb der Datenverarbeitungseinheit 150 benötigte Energie auch im Energiecontainer 60 selbst gewonnen werden, beispielsweise über darin gespeicherten Wasserstoff, über eine Brennstoffzelle oder dergleichen.

Weiterhin umfasst die erfindungsgemäße Einrichtung 100 vorzugsweise wenigstens einen Datenanschluss 151, über den Rechenleistung für wenigstens einen externen Verbraucher zur

Verfügung stellbar ist. Dieser Datenanschluss 151 ist beispielsweise in von außen zugänglicher Form an dem Energiecontainer 60 angebracht. In einer Notfallsituation, beispielsweise bei einer Katastrophe, einem militärischen Angriff, einem Anschlag, Sabotage oder einem Hackerangriff, der zu einem Stromausfall führt, kann über den erfindungsgemäßen Energiecontainer 60 einerseits kurzfristig eine Energieversorgung zur Verfügung gestellt werden und zusätzlich kann auch Rechnerleistung zur Verfügung gestellt werden. Auf diese Weise ist es möglich, bei einem Ausfall von Rechenzentren, die in der Notfallsituation wegen des Stromausfalls nicht mehr arbeiten, über den Energiecontainer Rechnerleistung bereitzustellen. Da der Energiecontainer 60 mobil ist, steht die Rechnerleistung somit kurzfristig an einem beliebigen Ort zur Verfügung. Energiecontainer 60 gemäß der vorliegenden Erfindung können in vorteilhafter Weise insbesondere für Einheiten des Zivilschutzes, Katastrophenschutzes, für technische Hilfswerke, Polizei, Feuerwehr und militärische Einheiten oder Einrichtungen des Gesundheitswesens wie Krankenhäuser, Pflegeheime etc. zur Verfügung gestellt werden. Daher ist es insbesondere vorteilhaft, wenn die erfindungsgemäße Einrichtung gemäß einer bevorzugten Weiterbildung der Erfindung wenigstens eine (Mobil-)Funkeinrichtung mit Sender und/oder Empfänger 176 umfasst, die insbesondere eingerichtet sind zur Nutzung durch systemrelevante Organisationen wie sie zuvor aufgelistet sind.

Die erfindungsgemäße Einrichtung 100 umfasst bevorzugt wenigstens eine Funkeinrichtung 75, die geeignet ist für eine Kommunikation mit Navigationsgeräten von Landfahrzeugen, Wasserfahrzeugen, Luftverkehr, Schienenverkehr, stationären Verkehrseinrichtungen, Polizei, Feuerwehr, technischen Hilfswerken oder militärischen Einrichtungen. Wie die beispielhafte Darstellung gemäß Figur 2 zeigt, ist eine solche Funkeinrichtung 75 in der Regel mit einer Antenne 176 zum Senden und Empfangen von Funksignalen verbunden.

Bei den vorgenannten stationären Verkehrseinrichtungen kann es sich beispielsweise um Tankstellen, Autobahnmeistereien, Eisenbahnstellwerke, Verkehrsanzeigesysteme, Verkehrsleitsysteme, Rundfunksender oder dergleichen handeln. Auf diese Weise ist die Einrichtung 1, das heißt insbesondere der Energiecontainer 60 in der Lage mit einer Verkehrseinrichtung oder einem Fahrzeug über Funksignale in Kontakt zu treten, so dass beispielsweise die Verkehrseinrichtung oder das Fahrzeug bei einer Anforderung eines Energiecontainers 60 den eigenen Standort durchgeben kann bzw. der Energiecontainer 60 seinen Standort, die vorhandenen Kapazitäten an elektrischer Energie und/oder Wasserstoff und/oder Wasser und gegebenenfalls weitere wichtige Daten kommunizieren kann.

Um Strom, Wasserstoff, Wasser, Kraftstoffe oder gegebenenfalls andere Medien an Verbraucher abzugeben, verfügt die Einrichtung 1 vorzugsweise über wenigstens ein Pumpsystem, insbesondere ein Pumpsystem zur Abgabe von mittels regenerativ erzeugter elektrischer Energie erzeugten Medien an Verbraucher oder ein Pumpsystem für Wasser oder Kraftstoffe, welches in der Zeichnung Figur 2 nicht dargestellt ist.

Die erfindungsgemäße Einrichtung 1 kann somit als eine vom öffentlichen Stromnetz unabhängige Notstromtankstelle 30 mit vorzugsweise restriktiv geregeltem Zugang für systemrelevante Organisationen ausgebildet sein.

Um die Abläufe bei Anforderung von Strom, Wasserstoff, Wasser, Kraftstoff, gegebenenfalls anderen Medien oder Rechnerleistung durch eine systemrelevante Organisation der oben genannten Art oder einen anderen Verbraucher zu steuern, verfügt der Energiecontainer 60 vorzugsweise über eine Steuereinheit 80. Über die Antenne 176 empfangene Funksignale können über die Funkeinrichtung 75 und die Datenleitung 81 an die Steuereinheit 80 geleitet und dort verarbeitet werden. Wird von einem Verbraucher Strom angefordert, kann dieser zunächst über die Steuereinheit 80 identifiziert und dessen Berechtigung zum Erhalt von beispielsweise elektrischer Energie geprüft werden, wenn es sich um einen restriktiv geregelten Zugang handeln. Dann kann die Steuereinheit 80 über die Leitung 82 einen entsprechenden Befehl an die Speichereinrichtung 40 geben, so dass dann die Abgabeeinrichtung 30 aktiviert wird und an dieser Strom an den berechtigten Verbraucher abgegeben werden kann. Es wird so verhindert, dass ein beliebiger, nicht berechtigter Verbraucher Strom aus dem Energiecontainer 60 erhält. In gleicher Weise kann beispielsweise die Abgabe von Wasserstoff, Wasser oder anderer Medien oder Rechnerleistung aus dem Energiecontainer 60 erfolgen. Der in der Erzeugungseinrichtung 70 erzeugte und in der Speichereinheit 71 gespeicherte Wasserstoff kann abgegeben werden, wenn die Steuereinheit 80 ein entsprechendes Signal eines Verbrauchers, der sich zuvor als Berechtigter identifiziert hat, erhält. Über die Datenleitung 83 kann die Speichereinheit 71 freigeschaltet werden, so dass über die Wasserstoffleitung 77 Wasserstoff an die Abgabeeinrichtung 173 strömen kann und der Verbraucher dort Wasserstoff entnehmen kann.

In ähnlicher Weise kann einem Verbraucher, der sich als Berechtigter identifiziert hat, Rechnerleistung aus dem Energiecontainer 60 zur Verfügung gestellt werden. Die in der Datenverarbeitungseinheit 150 verfügbare Rechnerleistung kann einem Verbraucher zur Verfügung gestellt werden, wenn die Steuereinheit 80 ein entsprechendes Signal eines Verbrauchers, der sich zuvor als Berechtigter identifiziert hat, erhält. Über die Datenleitung 84 kann dann Rechnerleistung oder auch Speicherplatz für Daten in der Datenverarbeitungseinheit 150 freigeschaltet werden, die dann über den Datenanschluss 151 am Energiecontainer 60 dem Verbraucher zur Verfügung steht.

Als ein weiteres beispielhaftes Medium kann Verbrauchern aus dem Energiecontainer 60 beispielsweise Wasser zur Verfügung gestellt werden. Dazu kann ein Wassertank 90 in dem Energiecontainer 60 vorgesehen sein, von dem aus eine Wasserleitung 91 zur Außenwand des Energiecontainers 60 führt, an der dann beispielsweise ein Wasserhahn 92 angeordnet sein kann, über den der Verbraucher Wasser zapfen kann.

### Bezugszeichenliste

- 1: Einrichtung zur Speicherung und Abgabe elektrischer Energie
- 10: erste Erzeugungseinrichtung für regenerative Energie
- 11: zweite Erzeugungseinrichtung für regenerative Energie
- 20: autarkes Stromnetz
- 30: Abgabeeinrichtung
- 40: Speichereinrichtung
- 50: dezentrales Rechenzentrum
- 51: Stromleitungen
- 52: externes Stromnetz
- 60: Energiecontainer, mobil oder transportabel
- 63: Fahrzeug
- 70: Erzeugungseinrichtung für Wasserstoff
- 71: Speichereinheit für Wasserstoff
- 72: Leitung
- 73: Wasserstoffleitung
- 74: Wasserstoffleitung
- 75: Funkeinrichtung
- 76: Stromleitung
- 77: Wasserstoffleitung
- 80: Steuereinheit
- 81: Datenleitung
- 82: Leitung
- 83: Datenleitung
- 84: Datenleitung
- 90: Wassertank
- 91: Wasserleitung
- 92: Wasserhahn
- 100: System
- 101: Anschluss zur Einspeisung von elektrischer Energie
- 102: Räder
- 150: Datenverarbeitungseinheit
- 151: Datenanschluss
- 173: Abgabeeinrichtung für Wasserstoff
- 176: Sender/Empfänger
- 301: elektrische Leitung

## Patentansprüche

1. Einrichtung (1) zur Speicherung und Abgabe elektrischer Energie umfassend:
- wenigstens einen Anschluss (101) zur Einspeisung regenerativ erzeugter elektrischer Energie;
- wenigstens eine Speichereinrichtung (40) zur Speicherung eingespeister regenerativ erzeugter elektrischer Energie,
- wenigstens eine Abgabeeinrichtung (30) zur Abgabe der regenerativ erzeugten elektrischen Energie aus der Einrichtung an einen externen Verbraucher,
- wobei die Einrichtung (1) als mobiler oder transportabler Energiecontainer (60) ausgebildet ist, in dem die wenigstens eine Speichereinrichtung (40) für regenerativ erzeugte elektrische Energie untergebracht ist und an dem die wenigstens eine Abgabeeinrichtung (30) für regenerativ erzeugte elektrische Energie angeordnet ist und
- wobei die Einrichtung (1) wenigstens eine Kommunikationseinrichtung (75, 176) zur drahtlosen Kommunikation umfasst, geeignet zum Empfangen und/ oder Senden von Signalen.

2. Einrichtung (1) nach Anspruch 1, wobei diese weiterhin eine Steuereinheit (80) umfasst, die mit der Kommunikationseinrichtung (75) in Kommunikationsverbindung steht, wobei die Steuereinheit (80) geeignet ist, bei Anforderung von elektrischer Energie durch einen Verbraucher auf die Abgabeeinrichtung (30) und/oder die Speichereinrichtung (40) einzuwirken, um eine Abgabe von elektrischer Energie an den Verbraucher zu veranlassen.

3. Einrichtung (1) nach Anspruch 1 oder 2, wobei diese wenigstens eine Empfangseinrichtung und/oder Sendeeinrichtung insbesondere wenigstens eine Antenne (176) umfasst, die Teil der Kommunikationseinrichtung (75) ist oder mit der Kommunikationseinrichtung (75) in Verbindung steht.

4. Einrichtung (1) nach einem der Ansprüche 1 bis 3, weiterhin umfassend wenigstens eine Sicherungseinrichtung, geeignet zu prüfen, ob ein Verbraucher, der die Abgabe elektrischer Energie aus der Einrichtung (1) anfordert, zu einer solchen Abgabe berechtigt ist.

5. Einrichtung (1) nach einem der Ansprüche 2 bis 4, wobei die Steuereinheit (80) ausgebildet ist, als Sicherungseinrichtung zu dienen und die Berechtigung eines Verbrauchers zur Abgabe elektrischer Energie aus der Einrichtung (1) zu prüfen.

6. Einrichtung nach einem der Ansprüche 4 oder 5, wobei die Abgabeeinrichtung (30) im Grundzustand gesperrt ist und erst nach Freigabe durch die Sicherungseinrichtung in einen Aktivzustand schaltbar ist, in der sie für eine Entnahme von elektrischer Energie durch einen Verbraucher entsperrt ist.

7. Einrichtung (1) nach einem der Ansprüche 4 bis 6, wobei die Kommunikationseinrichtung (75, 176) und/oder eine mit dieser zusammenwirkende Datenverarbeitungseinheit (151) eingerichtet ist, verschlüsselte Signale zu decodieren, die Informationen für die Identifizierung eines Verbrauchers enthalten.

8. Einrichtung (1) nach einem der Ansprüche 4 bis 7, wobei die Steuereinheit (80) eingerichtet ist, nach Identifizierung und Feststellung der Berechtigung eines Verbrauchers die Abgabeeinrichtung (30) zu entsperren.

9. Einrichtung (1) nach einem der Ansprüche 1 bis 8, weiterhin umfassend wenigstens eine Erzeugungseinrichtung (70) für Wasserstoff und/oder wenigstens eine Speichereinheit (71) für Wasserstoff und wenigstens eine Abgabeeinrichtung (173) für Wasserstoff an einen Verbraucher.

10. Einrichtung (1) nach einem der Ansprüche 1 bis 9, weiterhin umfassend wenigstens eine Speichereinheit (90) für Wasser, Gas oder Kraftstoff und wenigstens eine Abgabeeinrichtung (92) für Wasser, Gas oder Kraftstoff an einen Verbraucher.

11. Einrichtung (1) nach einem der Ansprüche 1 bis 10, weiterhin umfassend wenigstens eine Datenverarbeitungseinheit (150) und/oder einen Datenspeicher und wenigstens einen Datenanschluss (151) eingerichtet für den Anschluss eines Geräts zur Dateneingabe in die Einrichtung (1) oder Datenentnahme aus der Einrichtung.

12. Einrichtung (1) nach einem der Ansprüche 9 bis 11, wobei die Steuereinheit (80) eingerichtet ist, einen Verbraucher zu identifizieren, dessen Berechtigung zur Entnahme von elektrischer Energie, Wasserstoff, Wasser, Gas oder Kraftstoff oder zum Empfang von Daten aus der Einrichtung oder zur Speicherung von Daten in der Einrichtung festzustellen und die entsprechende Abgabeeinrichtung (173) für elektrische Energie, Wasserstoff oder die Abgabeeinrichtung (92) für Wasser, Gas oder Kraftstoff oder den Datenanschluss (151), insbesondere nach durchlaufen eines entsprechenden Sicherheitsprotokolls zu entsperren.

13. System (100) umfassend wenigstens eine Einrichtung (1) mit den Merkmalen eines der Ansprüche 1 bis 12, wobei dieses System (100) weiterhin umfasst:
- wenigstens eine ortsfeste Einrichtung (10, 11) zur Erzeugung regenerativer elektrischer Energie, welche von dem mobilen oder transportablen Energiecontainer (60) räumlich entfernt ist und
- wenigstens einen Verbraucher, geeignet drahtlos mit der Kommunikationseinrichtung (75) des Energiecontainers (60) in Kontakt zu treten, sowie geeignet, nach einem Nachweis zur Berechtigung zur Entnahme mindestens eines Mediums, ausgewählt aus der Gruppe umfassend im Energiecontainer (60) gespeicherte regenerativ erzeugte elektrische Energie, Wasserstoff, Wasser, Gas und Kraftstoff, dieses Medium aus dem Energiecontainer (60) zu entnehmen oder Daten aus dem Energiecontainer (60) zu empfangen oder in diesem zu speichern.

14. System (100) nach Anspruch 13, wobei wenigstens ein Verbraucher ausgewählt ist aus der Gruppe umfassend systemrelevante Einrichtungen, insbesondere Einrichtungen des Gesundheitswesens, des Militärs, der Polizei, der Feuerwehr, des Zivilschutzes, eines technischen Hilfswerks oder des Katastrophenschutzes.
